# EUROPEAN PATENT APPLICATION

(11) **EP 2 112 529 A1**
(43) Date of publication of application: **28.10.2009**
(21) Application number: 08720793.2
(22) Date of filing: 15.02.2008
(51) Int. Cl.: G01T 1/185, G01T 1/20, G01T 1/202

(54) **RADIATION DETECTOR AND METHOD FOR DETECTING RADIATION**

(30) Priority: 16.02.2007 JP 2007036816
(71) Applicant: Tokuyama Corporation, Shunan-shi, Yamaguchi 745-0053 (JP); The University of Tokyo, Tokyo 113-0033 (JP); Tohoku University, Aoba-ku Sendai-shi Miyagi 980-0812 (JP)
(72) Inventor: TAKAHASHI, Hiroyuki, Tokyo 113-0033 (JP); YOSHIKAWA, Akira, Sendai-shi Miyagi 980-0812 (JP); SIMURA, Rayko, Sendai-shi Miyagi 980-0812 (JP); FUKUDA, Kentaro, Shunan-shi Yamaguchi 745-0053 (JP); SUYAMA, Toshihisa, Shunan-shi Yamaguchi 745-0053 (JP)
(74) Representative: Albrecht, Thomas
(86) International application number: PCT/JP2008/053004
(87) International publication number: WO 2008/099971

(57) **Abstract**

A radiation detection apparatus comprising a scintillator composed of a lanthanum fluoride crystal containing neodymium or a lithium barium fluoride crystal containing neodymium, for converting incident radiation into ultraviolet ray and a micro-strip gas chamber for converting the incident ultraviolet ray into an electric signal and capable of extracting the radiation as an electric signal.

The radiation detection apparatus which has excellent spatial resolution and can detect even a high-energy photon at high sensitivity is provided at low cost.

## Description

### TECHNICAL FIELD

The present invention relates to a novel radiation detection apparatus. The radiation detection apparatus can be advantageously used in the medical field such as positron emission tomography and X-ray computed tomography, the industrial field such as nondestructive inspections and the security field such as baggage inspection.

### BACKGROUND ART

Radiation technology is used in a wide variety of fields including the medical field such as positron emission tomography and X-ray computed tomography, the industrial field such as nondestructive inspections and the security field such as baggage inspection and is still making remarkable progress.

A radiation detection apparatus is key technology which plays an important role in the radiation technology, and higher performance is required for radiation detection sensitivity, spatial resolution for the incident position of radiation or count rate along with progress in the radiation technology. Further, along with the spread of the radiation technology, the reduction of the cost and size of the radiation detection apparatus is desired as well.

An example of the currently known radiation detection apparatus is a scintillation detector which comprises a scintillator and a photomultiplier tube. Since the scintillation detector comprises a scintillator which has a efficient absorption cross section for the radiation, it has high detection sensitivity for radiation and can detect a high-energy photon efficiently but the improvement of spatial resolution and the reduction of the size of the apparatus are limited by the restrictions of the size of the photomultiplier tube. Since the photomultiplier tube is expensive, it is difficult to cut the cost of the apparatus.

As a radiation detection apparatus which has high spatial resolution and is easily reduced in size and cost, there is known a gas counter. However the gas counter has low absorption cross section and poor detection sensitivity for a high-energy photon.

To solve the above problems, a radiation detection apparatus comprising a scintillator having large absorption cross section and a multi-wire proportional counter which is a type of gas counter has been proposed (refer to S. Tavernier et al, "Determination of the scintillation light yield of neodymium doped LaF3 scintillator", Nuclear Instruments and Physics Research, A311, 301 (1992)) but the apparatus still has a problem with detection sensitivity and spatial resolution.

### DISCLOSURE OF THE INVENTION

It is an object of the present invention to provide an inexpensive radiation detection apparatus which has excellent spatial resolution and can detect a high-energy photon at high sensitivity.

The inventors of the present invention paid attention to a gas counter which has excellent spatial resolution and is easily reduced in size and cost and conducted studies to enhance the high-energy photon detection sensitivity of the gas counter. As a result, they found that the above object can be attained by combining a scintillator having large absorption cross section for high-energy photon and a micro-strip gas chamber (may be referred to as "MSGC" hereinafter) which is a type of gas counter and accomplished the present invention.

That is, the present invention is a radiation detection apparatus which comprises a scintillator for converting incident radiation into ultraviolet ray and a micro-strip gas chamber for receiving the ultraviolet ray and converting it into an electric signal and extracts radiation as an electric signal.

### BRIEF DESCRIPTION OF THE DRAWINGS

Fig. 1 is a schematic diagram of the radiation detection apparatus of the present invention;
Fig. 2 is a diagram showing the basic configuration of MSGC which is a constituent element of the radiation detection apparatus of the present invention;
Fig. 3 is a conceptual diagram explaining the reading of 2-D position by MSGC;
Fig. 4 is a schematic diagram of an apparatus for manufacturing a crystal by a µ-PD method;
Fig. 5 is a diagram showing the detection result of γ-rays by the radiation detection apparatus of the present invention and shows a pulse height spectrum when Nd:LaF₃ is used as a scintillator; and
Fig. 6 is a diagram showing the detection result of γ-rays by the radiation detection apparatus of the present invention and shows a pulse height spectrum when Nd:BaLiF₃ is used as a scintillator.

### BEST MODE FOR CARRYING OUT THE INVENTION

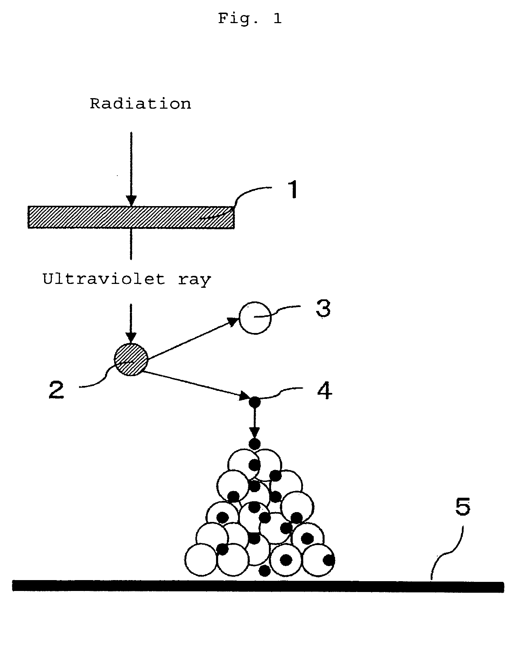

The operation principle of the radiation detection apparatus of the present invention will be described with reference to Fig. 1. First, incident radiation is converted into ultraviolet ray by a scintillator 1. A gas 2 is ionized by the ultraviolet ray to produce an ionized ion 3 and an electron 4. The produced electron is accelerated toward an anode 5 to which high positive voltage is applied and collides with another gas molecule to induce the ionization of the another gas molecule, thereby causing an electron avalanche phenomenon. A charge amplified to 100 to 10,000 times by the electron avalanche phenomenon is read from an anode and a cathode of MSGC with the result that the incident radiation can be detected as an electric pulse signal.

The radiation detection apparatus of the present invention will be described in detail hereinunder.

Radiation to be detected by the radiation detection apparatus of the present invention is not particularly limited and the apparatus can be advantageously used to detect X-rays, γ-rays or neutron rays. The radiation detection apparatus of the present invention has a maximum effect in the detection of high-energy photons such as γ-rays.

Although the scintillator which is a constituent element of the radiation detection apparatus of the present invention is used without restriction if it can convert radiation into ultraviolet ray, a scintillator which can convert radiation into a vacuum ultraviolet ray having a short wavelength out of ultraviolet rays is preferably used to carry out the ionization of a gas efficiently.

In the present invention, the term "vacuum ultraviolet ray" refers to an ultraviolet ray having a wavelength of 200 nm or less. The vacuum ultraviolet ray can ionize a gas efficiently because it has high energy.

The scintillator for converting radiation into a vacuum ultraviolet ray is preferably a fluoride crystal. Since the vacuum ultraviolet ray is easily absorbed by materials, there is a problem that the scintillator absorbs the vacuum ultraviolet ray converted by itself. However, a fluoride crystal hardly absorbs the vacuum ultraviolet ray exceptionally and therefore can be advantageously used in the present invention.

To enhance absorption cross section for high-energy photon, a scintillator having high density and a large effective atomic number is preferably used.

Examples of the scintillator which satisfies the above requirements include lanthanum fluoride containing neodymium(to be expressed as Nd:LaF₃ hereinafter), lithium barium fluoride containing neodymium (to be expressed as Nd:BaLiF₃ hereinafter) and barium yttrium fluoride containing neodymium (to be expressed as Nd:BaY₂F₈ hereinafter).

According to studies conducted by the inventors of the present invention, Nd:LaF₃ and Nd:BaLiF₃ can convert radiation into 175 nm and 183 nm vacuum ultraviolet rays, have densities of 5.9 g/mL and 5.2 g/mL and effective atomic numbers of 50 and 48, respectively, which means that they have excellent characteristic properties.

The surfaces except for the radiation incident surface and the formed ultraviolet ray extraction surface of the scintillator may be covered with a film which reflects the radiation and the ultraviolet ray.

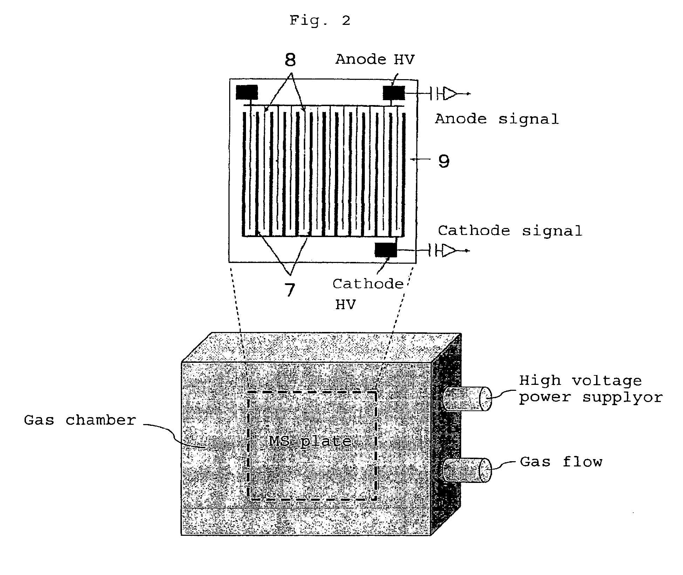

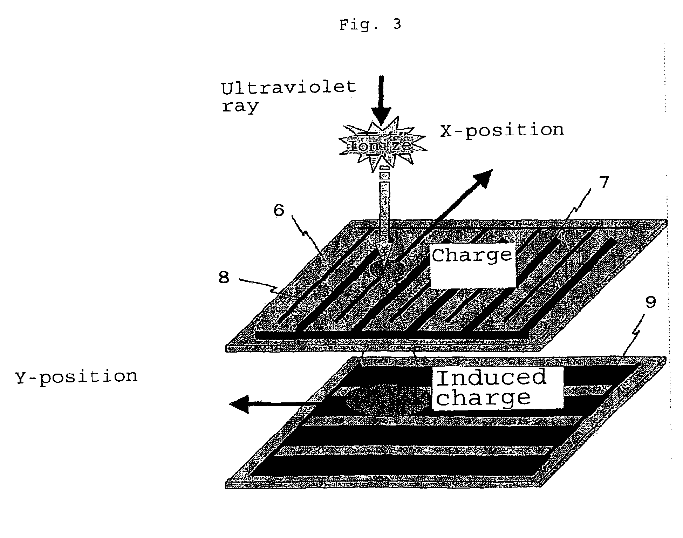

The basic configuration of MSGC which is a constituent element of the radiation detection apparatus of the present invention is shown in Fig. 2 and Fig. 3. MSGC is constructed by installing a micro-strip plate (may also be referred to as "MS plate" hereinafter) manufactured by using photolithography technology in a gas chamber.

The details of the MS plate are described, for example, in WO02/001598 pamphlet and technology described therein can be employed as it is.

The MS Plate has metal cathode strips 7 and metal anode strips 8 which are arranged alternately on the front surface of an nonconductive substrate 6 and read electrodes (back strips) 9 which are arranged orthogonal to the cathode strips 7 and the anode strips 8 on the rear surface of the substrate 6.

Describing the size of the MS plate, the pitch of the electrodes is 200 to 1,000 µm, the width of the cathode is 50 to 400 µm, the width of the anode is 5 to 10 µm, and the size of the substrate is 20 to 200 mm².

Any substrate may be used without restriction as the substrate of the MS plate used in the present invention if it is nonconductive and its thickness is not particularly limited. For example, synthetic quartz having a thickness of less than 1 mm can be preferably used as the substrate to make the radiation detection apparatus very inexpensive and small in size.

Further, MSGC has a high voltage power supply for making a potential difference between the cathode strips 7 and the anode strips 8 which are adjacent to each other. When high voltage is applied to the both electrodes (the cathode strips 7 and the anode strips 8), a charge generated by the ionization of the gas is amplified and read from the anode strips 8 as X-position. An induced charge generated on the rear side of the substrate 6 by a incoming charge on the front side of the substrate 6 is read from the read electrodes 9 as Y-position.

Signals read from the anode strips 8 and the read electrodes 9 are applied to a signal processing circuit and analyzed by a computer.

The circuit for reading and processing signals obtained from the electrodes employs technology known in this field and is composed of, for example, an amplifier and a multi-channel analyzer or an application specific integrated circuit (ASIC).

The gas used in the radiation detection apparatus of the present invention is not particularly limited but preferably tetrakisdimethyl aminoethylene, trimethylamine, triethylamine, acetone or benzene having a low ionization potential. These gases may be used alone or may be used as mixed gas with an argon gas.

In the radiation detection apparatus of the present invention, a combination of a scintillator and MSGC is not particularly limited. For example, the scintillator is inserted into the chamber of MSGC, or ultraviolet ray from the scintillator is introduced into the chamber of MSGC through a suitable window. In view of the characteristic properties such as response speed of the radiation detection apparatus, it is preferred that ultraviolet ray generated by the scintillator should be directly introduced into MSGC, for example, the scintillator should be inserted into the chamber and placed in the vicinity to the MS plate.

As described above, according to the present invention, an inexpensive radiation detection apparatus which has excellent spatial resolution and is capable of detecting even a high-energy photon at high sensitivity can be obtained. The radiation detection apparatus can be advantageously used in the medical field such as positron emission tomography and X-ray computed tomography, the industrial field such as nondestructive inspections and the security field such as baggage inspection.

### Examples

The following examples are provided for the purpose of further illustrating the present invention but are in no way to be taken as limiting.

### Example 1

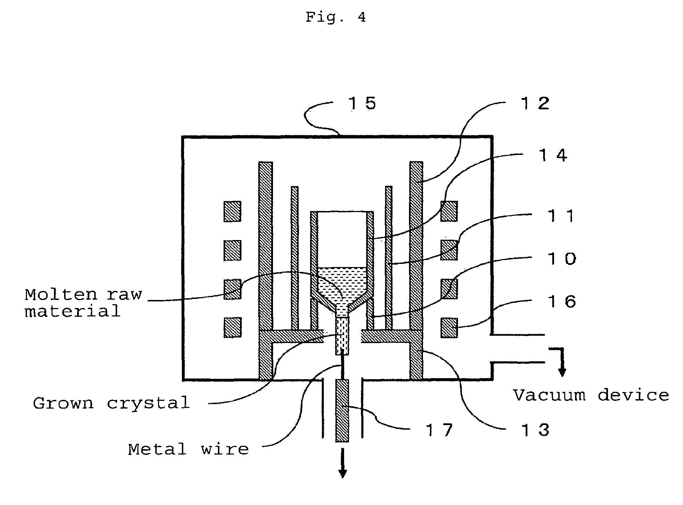

A scintillator used in the radiation detection apparatus of the present invention was manufactured by using the crystal manufacturing apparatus shown in Fig. 4.

Lanthanum fluoride and neodymium fluoride having a purity of 99.99% were used as raw materials. An after-heater 10, a heater 11, a thermal insulator 12, a stage 13 and a crucible 14 were made of high-purity carbon and a hole formed in the bottom of the crucible was columnar with a diameter of 2.2 mm and a length of 0.5 mm.

1.1 g of lanthanum fluoride and 0.0057 g of neodymium fluoride were weighed and a mixed raw material obtained by mixing them together well was charged into the crucible 14.

The crucible 14 filled with the raw material was set on the top portion of the after-heater 10, and the heater 11 and the insulating material 12 were placed around the crucible 14 sequentially. Then, a vacuum device comprising an oil-sealed rotary pump and an oil diffusion pump was used to evacuate the inside of a chamber 15 to 1.0 x 10⁻⁴ Pa, and a mixed gas of argon and methane tetrafluoride was introduced into the chamber 15 to carry out the substitution of a gas.

After the inside pressure of the chamber 15 was set to atmospheric pressure, the raw material was heated by a radio- frequency coil 16 to be molten but the drop of the molten raw material from the hole in the bottom of the crucible 14 was not seen. Then, a W-Re wire at the end of a pull-down rod 17 was inserted into the hole to pull out the molten raw material. The pull-down operation was repeated while the temperature of the molten raw material was gradually raised by adjusting the radio-frequency output, and the molten raw material could be taken out from the above hole.

The molten raw material was pulled down to start its crystallization by controlling the radio-frequency output so that the temperature at this point was maintained. The molten raw material was pulled down continuously at a rate of 3 mm/hr for 20 hours to obtain an Nd:LaF₃ crystal. The crystal had a diameter of 2 mm and a length of 60 mm.

The above Nd:LaF₃ crystal was cut to a length of 20 mm with a blade saw having a diamond blade and shaped to a length of 20 mm, a width of 2 mm and a thickness of 1 mm in the long-axis direction of the crystal. Thereafter, each surface of the crystal was optically polished to obtain a scintillator used in the present invention.

The above scintillator and the MS plate were set in the chamber. The MS plate had cathodes having a width of 60 µm and a height of 0.2 µm and anodes having a width of 5 µm and a height of 0.2 µm on a quartz substrate of 50 mm x 50 mm x 1 mm t. The interval between the anodes was 400 µm and the interval between the electrodes was 10 µm.

Then, a 30 % methane-argon mixed gas saturated with triethylamine vapor was introduced into the chamber to form MSGC.

A voltage of 700 V was applied to the anodes of the MS plate and 662 KeV γ-rays were irradiated from the outer side of MSGC. Charge pulses read from the anodes were amplified by the amplifier and processed by the multi-channel analyzer to obtain the pulse height spectrum.

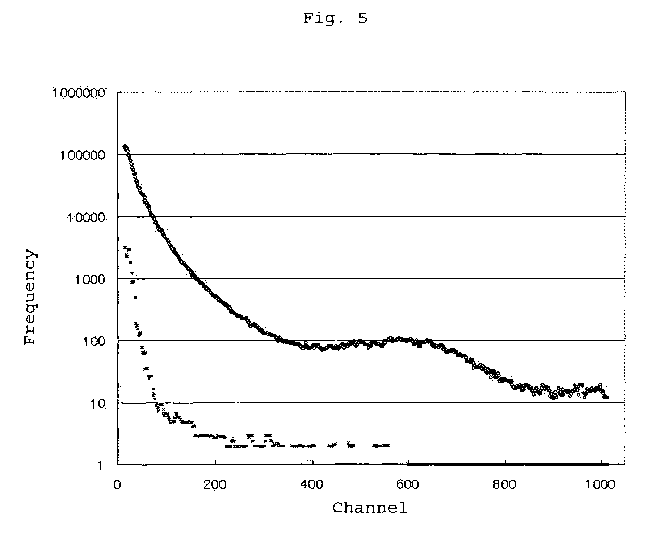

The obtained pulse height spectrum is shown in Fig. 5. It is understood from the pulse height spectrum that the radiation detection apparatus of the present invention can detect γ-rays having a high energy of 662 keV efficiently.

### Example 2

An Nd: BaLiF₃ crystal was manufactured in the same manner as in Example 1 except that 0.86 g of barium fluoride, 0.13 g of lithium fluoride and 0.0049 g of neodymium fluoride were used as raw materials. The barium fluoride, lithium fluoride and neodymium fluoride had a purity of 99.99 %.

The crystal was processed in the same manner as in Example 1 to obtain a scintillator used in the present invention.

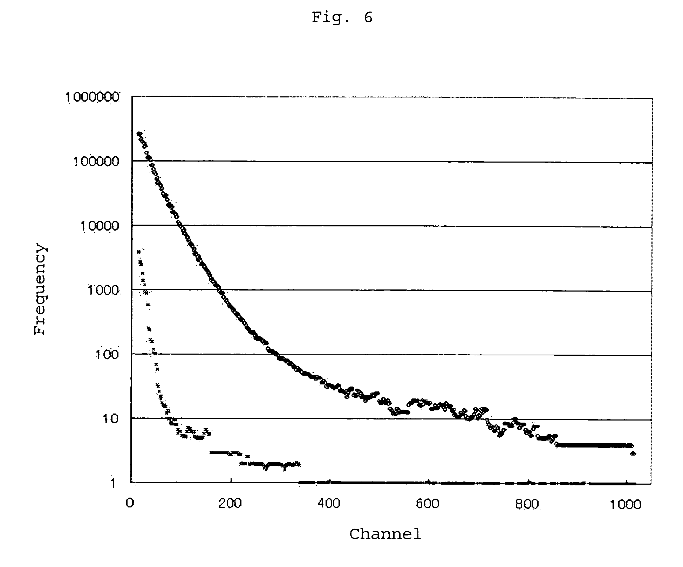

The obtained scintillator was used to obtain a pulse height spectrum in the same manner as in Example 1. The results are shown in Fig. 6. It is understood from the pulse height spectrum that the radiation detection apparatus of the present invention can detect γ-rays having a high energy of 662 keV efficiently.

## Claims

1. A radiation detection apparatus which comprises a scintillator for converting incident radiation into ultraviolet ray and a micro-strip gas chamber for receiving the ultraviolet ray and converting the ultraviolet ray into an electric signal and extracts the radiation as an electric signal.

2. The radiation detection apparatus according to claim 1, wherein the scintillator is a fluoride crystal.

3. The radiation detection apparatus according to claim 2, wherein the fluoride crystal is a lanthanum fluoride crystal containing neodymium or a lithium barium fluoride crystal containing neodymium.

4. A method of detecting radiation, comprising the steps of:
converting incident radiation into ultraviolet ray by means of a scintillator;
introducing the ultraviolet ray into a micro-strip gas chamber to ionize a gas; and
extracting the formed charge as an electric signal.
